(19) Europäisches Patentamt
European Patent Office
Office européen des brevets

(11) **EP 3 503 651 A1**

(12) # EUROPEAN PATENT APPLICATION
published in accordance with Art. 153(4) EPC

(43) Date of publication:
**26.06.2019 Bulletin 2019/26**

(21) Application number: **18836588.6**

(22) Date of filing: **29.10.2018**

(51) Int Cl.:
**H04W 72/04** (2009.01)

(86) International application number:
**PCT/KR2018/012920**

(87) International publication number:
**WO 2019/083341 (02.05.2019 Gazette 2019/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.10.2017 US 201762577721 P**
**17.11.2017 US 201762587476 P**

(71) Applicant: **LG Electronics Inc.**
**Seoul 07336 (KR)**

(72) Inventors:
• **JO, Soonki**
 **Seoul 06772 (KR)**
• **YI, Yunjung**
 **Seoul 06772 (KR)**
• **YOON, Sukhyon**
 **Seoul 06772 (KR)**
• **KO, Hyunsoo**
 **Seoul 06772 (KR)**

(74) Representative: **Maikowski & Ninnemann Patentanwälte Partnerschaft mbB Postfach 15 09 20 10671 Berlin (DE)**

(54) **METHOD FOR OPERATING DEVICE IN WIRELESS COMMUNICATION SYSTEM, AND DEVICE USING SAME**

(57) A method for operating a device in a wireless communication system and a device using the method are provided. The method includes receiving configuration information configuring a specific resource, receiving slot format information informing a transmission direction of the specific resource, and determining whether a predetermined operation in the specific resource is actually performed according to the transmission direction.

FIG. 11

EP 3 503 651 A1

**Description**

Field of the invention

The present invention relates to wireless communication, and more particularly, to a method of operating a device in a wireless communication system and a device using the method.

Related Art

As communication devices have increasingly required greater communication capacity, the necessity for improved mobile broadband communication, relative to an existing radio access technology (RAT), has emerged. Also, massive machine type communications (MTC), which provides many different services by connecting multiple devices and objects, is also one of the major issues to be considered in next generation communications.

A communication system considering services or terminals vulnerable to reliability or latency has also been discussed, and a next-generation RAT considering improved mobile broadband communication, massive MTC, ultra-reliable and low latency communication (URLLC), and the like, may also be termed a new RAT or new radio (NR).

In NR, methods of supporting orthogonal frequency division multiplexing (OFDM) that can have variable numerology according to various services are considered. In other words, OFDM (or multiple access) having independent numerology for each time and frequency resource region can be considered in NR systems.

Further, in order to support various services, an NR system considers flexibility as important design philosophy. For example, when a scheduling unit is a slot, a random slot may be used as a physical downlink shared channel (PDSCH) transmission slot, i.e., a physical channel that transmits downlink data (hereinafter, referred to as a DL slot) or a physical uplink shared channel (PUSCH) transmission slot, i.e., a physical channel that transmits uplink data (hereinafter, referred to as a UL slot). Further, for flexibility, in one slot of the NR system, a UL region that may be used for an uplink and a DL region that may be used for a downlink may be changed to a symbol unit constituting a slot.

NR may also set resources whose transmission directions are semi-statically determined as needed. However, in a UE or UE group, it may not be appropriate to use all resources whose transmission directions are semi-statically determined as they are. For example, when there is a resource segment set commonly to a downlink to all UEs in a cell, it may be necessary to use only some resources (or to not use some resources) in the resource segment. In such a case, it may not be desirable to semi-statically change a transmission direction of the resource in NR requiring high scheduling flexibility and low latency.

**SUMMARY OF THE INVENTION**

The present invention provides a method of operating a device in a wireless communication system and a device using the method.

In one aspect, provided is a method for operating a user equipment (UE) in a wireless communication system. The method includes receiving configuration information configuring a specific resource, receiving slot format information informing a transmission direction at the specific resource and determining whether a predetermined operation in the specific resource is actually performed according to the transmission direction.

The configuration information may be received through radio resource control (RRC) signal.

The slot format information may be received through downlink control information (DCI) received which is received through a physical downlink control channel (PDCCH).

The specific resource may be a resource configured semi-statically.

The transmission direction may comprise a downlink or an uplink.

The predetermined operation in the specific resource may be a channel state information reference signal (CSI-RS) reception operation.

The CSI-RS reception operation may be performed only when the slot format information indicates a transmission direction of the specific resource to a downlink.

The specific resource may be a resource indicated to a flexible resource by the configuration information.

In another aspect, provided is a user equipment (UE). The UE includes a transceiver configured to transmit and receive a radio signal and a processor coupled to the transceiver. The processor is configured to receive configuration information configuring a specific resource, to receive slot format information informing a transmission direction of the specific resource, and to determine whether a predetermined operation in the specific resource is actually performed according to the transmission direction.

The predetermined operation in the specific resource may be a channel state information reference signal (CSI-RS) reception operation.

The CSI-RS reception operation may be performed in the specific resource only when the slot format information indicates a transmission direction of the specific resource to a downlink.

In still another aspect, provided is a method for operating a base station in a wireless communication system. The method includes transmitting configuration information configuring a specific resource to a user equipment (UE), transmitting slot format information informing a transmitting direction of the specific resource to the UE and performing a predetermined operation with the UE in the specific resource based on the configuration information and the slot format information.

The predetermined operation in the specific resource may be a channel state information reference signal (CSI-RS) transmission operation.

The CSI-RS transmission operation may be performed in the specific resource only when the slot format information indicates a transmission direction of the specific resource to a downlink.

In still another aspect, provided is a base station. The base station includes a transceiver configured to transmit and receive a radio signal and a processor coupled to the transceiver. The processor is configured to transmit configuration information configuring a specific resource to a user equipment (UE), to transmit slot format information informing a transmission direction of the specific resource to the UE, and to perform a predetermined operation with the UE in the specific resource based on the configuration information and the slot format information.

In the present invention, it can be determined based on slot format information notifying a transmission direction in a dynamic manner whether a predetermined operation is actually performed in resources whose transmission direction is set semi-statically. Therefore, it is possible to meet low latency requirements while ensuring flexibility in an aspect of resource scheduling.

## BRIEF DESCRIPTION OF THE DRAWINGS

FIG. 1 shows a conventional wireless communication system.

FIG. 2 is a diagram showing a radio protocol architecture for a user plane.

FIG. 3 is a diagram showing a radio protocol architecture for a control plane.

FIG. 4 illustrates a system structure of a next generation radio access network (NG-RAN) to which NR is applied.

FIG. 5 illustrates a frame structure that may be applied in NR.

FIG. 6 illustrates CORESET.

FIG. 7 is a diagram illustrating a difference between a related art control region and the CORESET in NR.

FIG. 8 illustrates an example of a frame structure that can be used in NR.

FIG. 9 is an abstract schematic diagram illustrating hybrid beamforming from the viewpoint of TXRUs and physical antennas.

FIG. 10 illustrates the beam sweeping operation for a synchronization signal and system information in a downlink (DL) transmission procedure.

FIG. 11 illustrates a method of operating a UE according to an embodiment of the present invention.

FIG. 12 illustrates the method of FIG. 11 in an aspect of a base station.

FIG. 13 illustrates a method of determining activation/deactivation of a resource and operating a resource based on an upper layer signal (e.g., configuration information of FIG. 11) that configures semi-statically a resource and slot format information.

FIG. 14 illustrates a UE operation according to another embodiment of the present invention.

FIG. 15 is a block diagram showing components of a transmitting device 10 and a receiving device 20 for implementing the present invention.

FIG. 16 illustrates an example of a signal processing module structure in the transmitting device 10.

FIG. 17 illustrates another example of the signal processing module structure in the transmitting device 10.

FIG. 18 illustrates an example of a wireless communication device according to an implementation example of the present invention.

## DESCRIPTION OF EXEMPLARY EMBODIMENTS

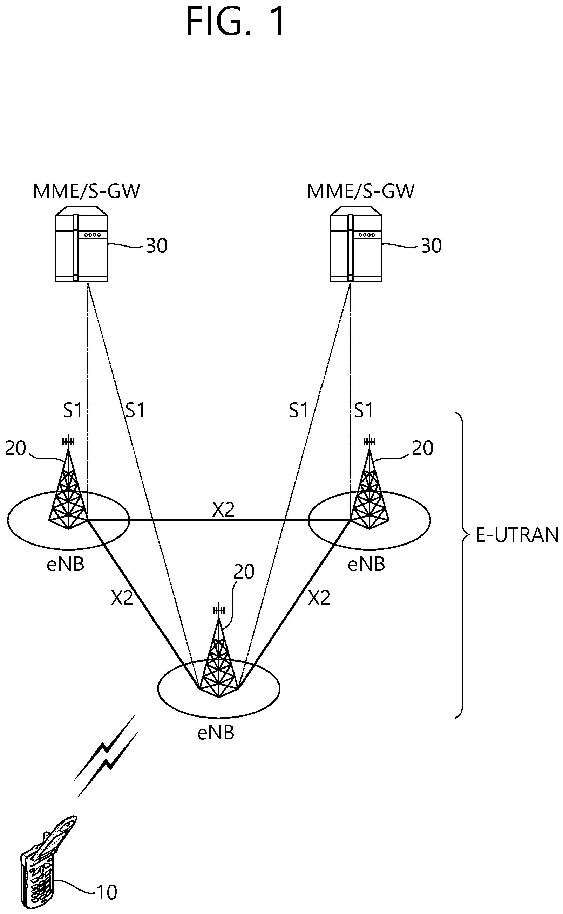

FIG. 1 shows a conventional wireless communication system. The wireless communication system may be referred to as an Evolved-UMTS Terrestrial Radio Access Network (E-UTRAN) or a Long Term Evolution (LTE)/LTE-A system, for example.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

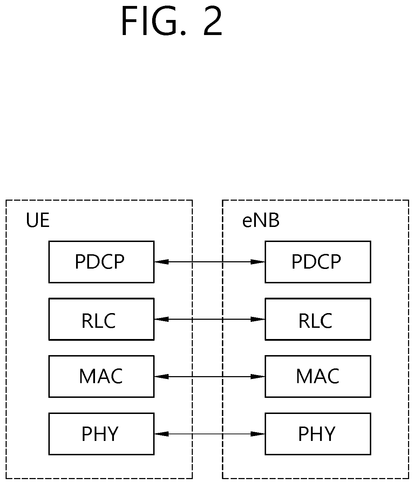

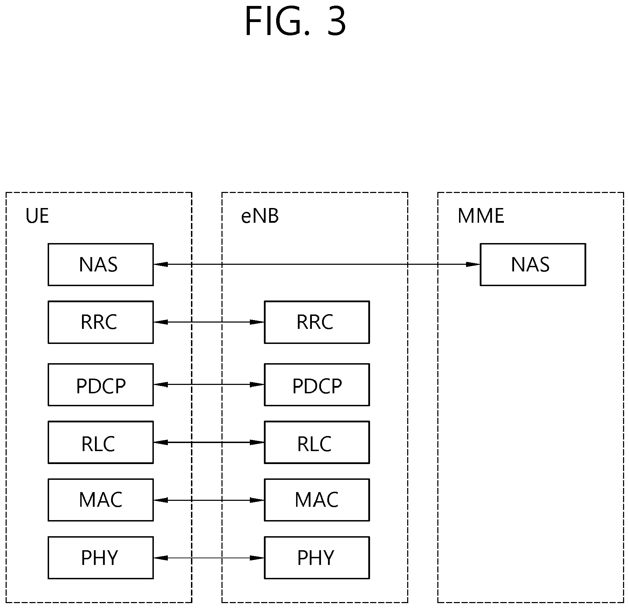

FIG. 2 is a diagram showing a radio protocol architecture for a user plane. FIG. 3 is a diagram showing a radio protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT) or new radio (NR) will be described.

As communication devices have increasingly required greater communication capacity, the necessity for improved mobile broadband communication, relative to an existing radio access technology (RAT), has emerged. Also, massive machine type communications (MTC), which provides many different services by connecting multiple devices and objects, is also one of the major issues to be considered in next generation communications. In addition, a communication system design considering services or terminals vulnerable to reliability or latency has also been discussed. An introduction of a next-generation RAT considering enhanced mobile broadband communication, massive MTC, ultra-reliable and low latency communication (URLLC), and the like, has been discussed, and in this disclosure, for the purposes of description, the corresponding technology will be termed new RAT or new radio (NR).

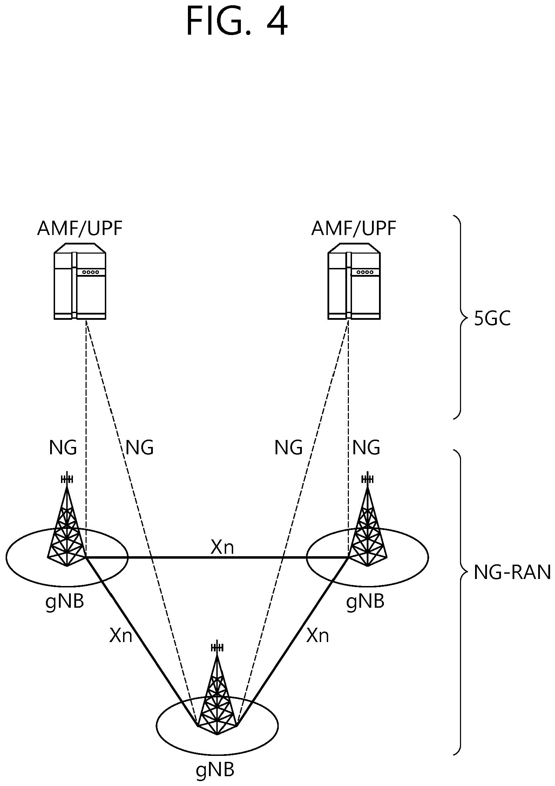

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a terminal. FIG. 4 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

The gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like.

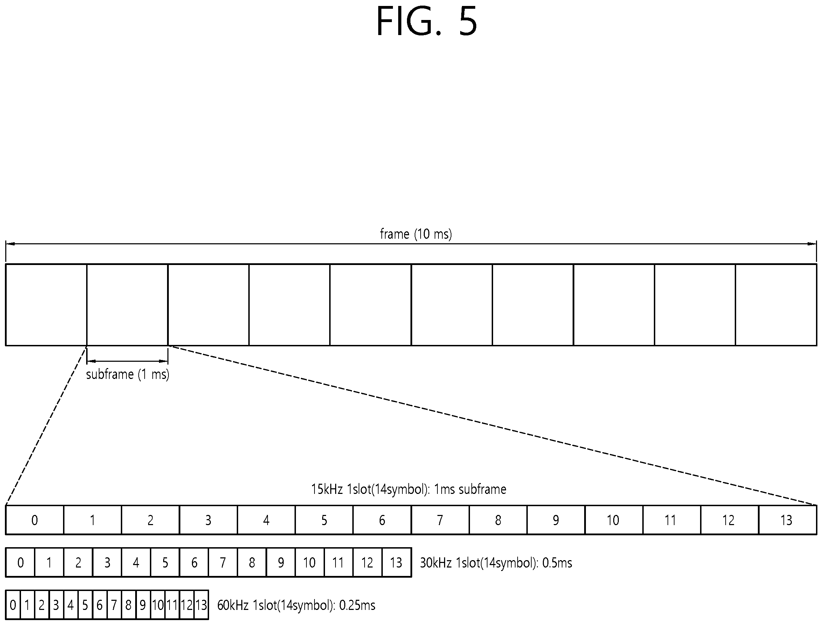

FIG. 5 illustrates a frame structure that may be applied in NR.

Referring to FIG. 5, a frame may be composed of 10 milliseconds (ms) and include 10 subframes each composed of 1 ms.

One or a plurality of slots may be included in a subframe according to subcarrier spacings.

The following table illustrates a subcarrier spacing configuration $\mu$.

[Table 1]

| $\mu$ | $\Delta f = 2^{\mu} \cdot 15 [kHz]$ | Cyclic prefix |
|---|---|---|
| 0 | 15 | Normal |
| 1 | 30 | Normal |
| 2 | 60 | Normal Extended |
| 3 | 120 | Extended |
| 4 | 240 | normal |

The following table illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In FIG. 5, $\mu$=0, 1, 2 is illustrated.

A physical downlink control channel (PDCCH) may include one or more control channel elements (CCEs) as illustrated in the following table.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Meanwhile, in a future wireless communication system, a new unit called a control resource set (CORESET) may be introduced. The terminal may receive the PDCCH in the CORESET.

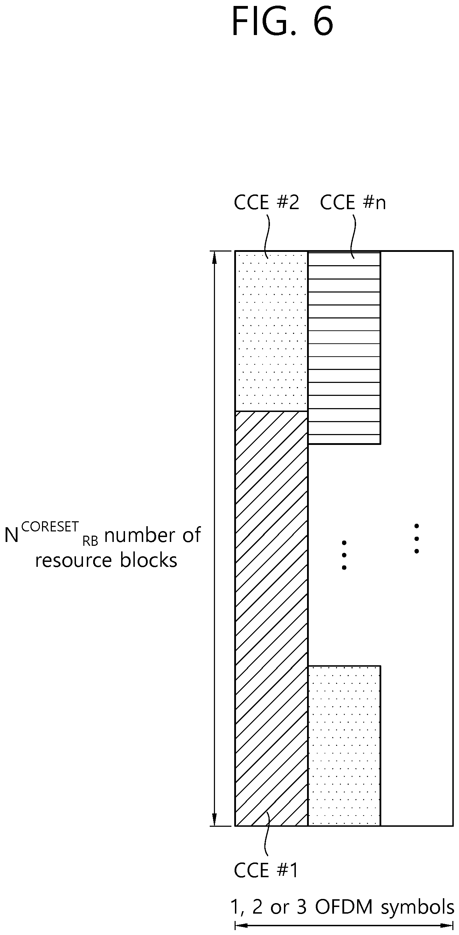

FIG. 6 illustrates CORESET.

Referring to FIG. 6, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 6, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the terminal.

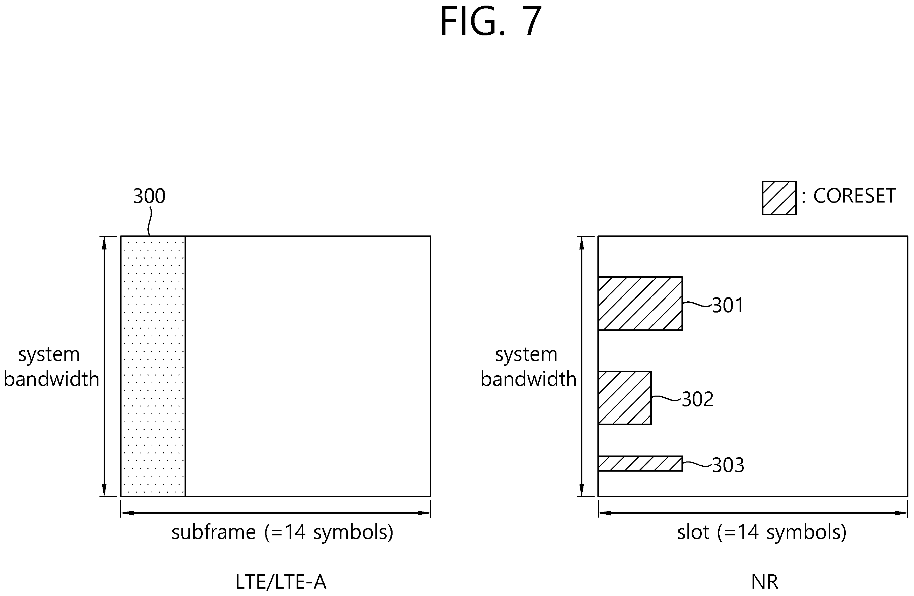

FIG. 7 is a diagram illustrating a difference between a related art control region and the CORESET in NR.

Referring to FIG. 7, a control region 300 in the prior art wireless communication system (e.g., LTE/LTE-A) is configured over the entire system band used by a base station (BS). All the terminals, excluding some (e.g., eMTC/NB-IoT terminal) supporting only a narrow band, must be able to receive wireless signals of the entire system band of the BS in order to properly receive/decode control information transmitted by the BS.

In contrast, the future wireless communication system introduces the CORESET described above. CORESETs 301, 302, and 303 are radio resources for control information to be received by the terminal and may use only a portion, rather than the entirety of the system bandwidth. The BS may allocate the CORESET to each UE and may transmit control information through the allocated CORESET. For example, in FIG. 7, a first CORESET 301 may be allocated to UE 1, a second CORESET 302 may be allocated to UE 2, and a third CORESET 303 may be allocated to UE 3. In the NR, the terminal may receive control information from the BS, without necessarily receiving the entire system band.

The CORESET may include a UE-specific CORESET for transmitting UE-specific control information and a common CORESET for transmitting control information common to all UEs.

Meanwhile, NR may require high reliability according to applications. In such a situation, a target block error rate (BLER) for downlink control information (DCI) transmitted through a downlink control channel (e.g., physical downlink control channel (PDCCH)) may remarkably decrease compared to those of conventional technologies. As an example of a method for satisfying requirement that requires high reliability, content included in DCI can be reduced and/or the amount of resources used for DCI transmission can be increased. Here, resources can include at least one of resources in the time domain, resources in the frequency domain, resources in the code domain and resources in the spatial domain.

In NR, the following technologies/features can be applied.

<Self-contained subframe structure>

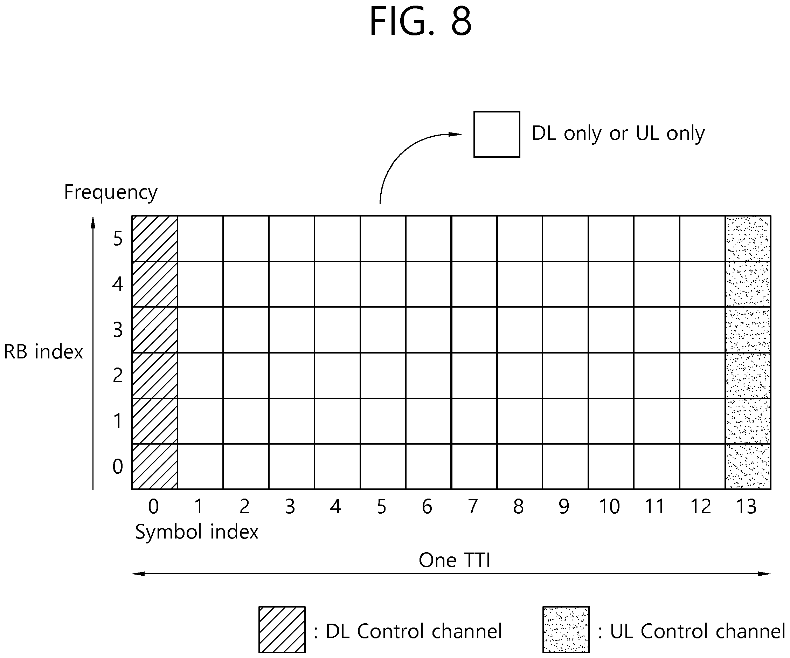

FIG. 8 illustrates an example of a frame structure that can be used in NR.

In NR, a structure in which a control channel and a data channel are time-division-multiplexed within one TTI, as shown in FIG. 8, can be considered as a frame structure in order to minimize latency.

In FIG. 8, a shaded region represents a downlink control region and a black region represents an uplink control region. The remaining region may be used for downlink (DL) data transmission or uplink (UL) data transmission. This structure is characterized in that DL transmission and UL transmission are sequentially performed within one subframe and thus DL data can be transmitted and UL ACK/NACK can be received within the subframe. Consequently, a time required from occurrence of a data transmission error to data retransmission is reduced, thereby minimizing latency in final data transmission.

In this self-contained subframe structure, a time gap for a base station and a terminal to switch from a transmission mode to a reception mode or from the reception mode to the transmission mode may be required. To this end, some OFDM symbols at a time when DL switches to UL may be set to a guard period (GP) in the self-contained subframe structure.

**<Analog beamforming #1>**

Wavelengths are shortened in millimeter wave (mmW) and thus a large number of antenna elements can be installed in the same area. That is, the wavelength is 1 cm at 30 GHz and thus a total of 64 ($8\times8$) antenna elements can be installed in the form of a 2-dimensional array at an interval of 0.5 lambda (wavelength) in a panel of $4\times4$ cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

**<Analog beamforming #2)>**

When a plurality of antennas is used in NR, hybrid beamforming which is a combination of digital beamforming and analog beamforming may be used.

Here, analog beamforming (or RF beamforming) refers to an operation of performing precoding (or combining) at an RF end. In hybrid beamforming, a baseband end and an RF end perform precoding (or combining) and thus it is possible to achieve the performance similar to digital beamforming while reducing the number of RF chains and the number of D/A (or A/D) converters.

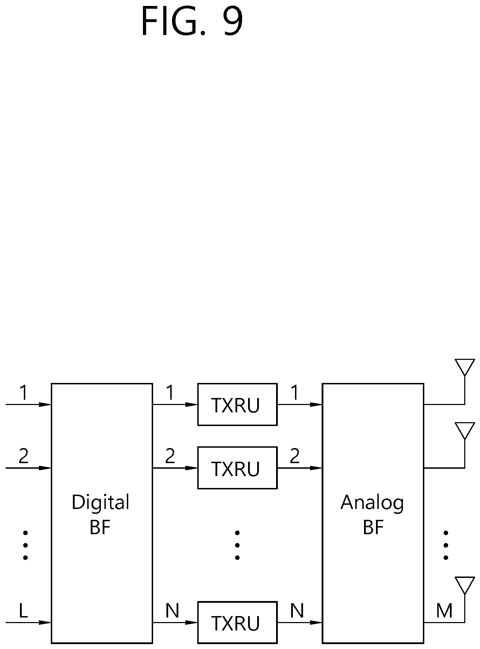

FIG. 9 is an abstract schematic diagram illustrating hybrid beamforming from the viewpoint of TXRUs and physical antennas.

A hybrid beamforming structure can be represented by N transceiver units (TXRUs) and M physical antennas. Then, digital beamforming for L data layers to be transmitted by a transmission end can be represented by an $N\times L$ matrix, and N converted digital signals are converted into analog signals through the TXRUs and then analog beamforming represented by $M\times N$ matrix is applied to the analog signals.

In the NR system, base stations are designed to be able to change analog beamforming in units of symbols to support more efficient beamforming for terminals located in a specific area. Furthermore, a method of introducing a plurality of antenna panels to which independently hybrid beamforming is applicable is also considered in the NR system when N specific TXRUs and M RF antennas are defined as one antenna panel in FIG. 9.

When a base station uses a plurality of analog beams as described above, analog beams suitable to receive signals may be different for terminals and thus a beam sweeping operation of sweeping a plurality of analog beams to be applied by a base station per symbol in a specific subframe (SF) for at least a synchronization signal, system information and paging such that all terminals can have reception opportunities is considered.

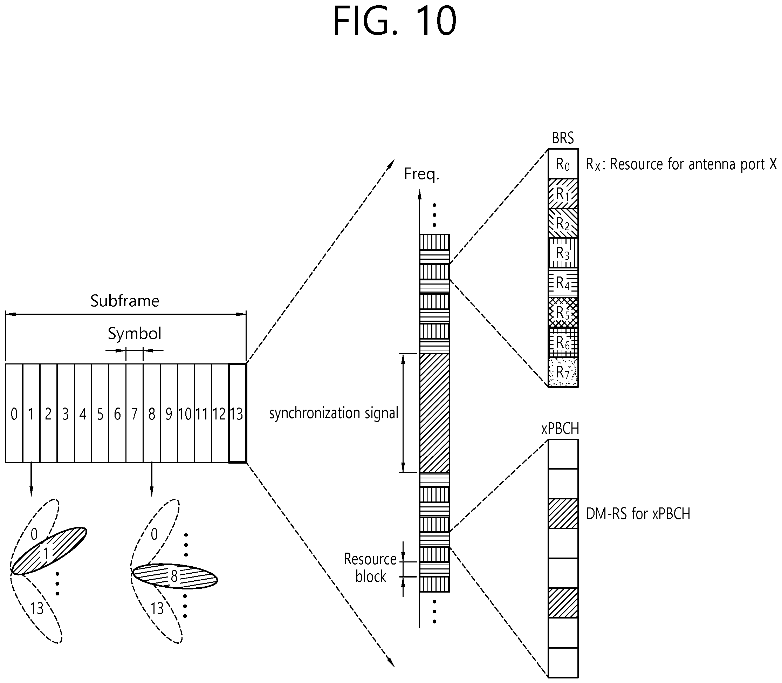

FIG. 10 illustrates the beam sweeping operation for a synchronization signal and system information in a downlink (DL) transmission procedure.

In FIG. 10, physical resources (or a physical channel) in which system information of the NR system is transmitted in a broadcasting manner is referred to as a physical broadcast channel (xPBCH). Here, analog beams belonging to different antenna panels can be simultaneously transmitted within one symbol, and a method of introducing a beam reference signal (BRS) which is a reference signal (RS) to which a single analog beam (corresponding to a specific antenna panel) is applied in order to measure a channel per analog beam, as illustrated in FIG. 10, is under discussion. The BRS can be defined for a plurality of antenna ports, and each antenna port of the BRS can correspond to a single analog beam. Here, all analog beams in an analog beam group are applied to the synchronization signal or xPBCH and then the synchronization signal or xPBCH is transmitted such that an arbitrary terminal can successfully receive the synchronization signal or xPBCH.

[RRM (radio resource management) measurement LTE]

LTE supports RRM operation including power control, scheduling, cell search, cell reselection, handover, radio link or connection monitoring, connection establishment/reestablishment, etc. Here, a serving cell can request RRM measurement information, which is a measurement value for the RRM operation, from a terminal, and a terminal can measure and report information such as cell search information, reference signal received power (RSRP) and reference signal received quality (RSRQ) with respect to each cell in LTE.

Specifically, a terminal receives 'measConfig' from a serving cell as a higher layer signal for RRM measurement in LTE. The terminal measures RSRP or RSRQ according to the information 'measConfig'. The RSRP and RSRQ are defined as follows.

The RSRP can be defined as a linear average of power contributions of resource elements which carry cell-specific reference signals within a considered measurement frequency band.

The RSRQ can be defined as NxRSRP/(E-UTRA carrier RSSI). N is the number of resource blocks in an E-UTRA carrier RSSI measurement band.

The RSSI refers to received broadband power including thermal noise and noise within a measurement band.

According to the above definition, a terminal operating in LTE can be permitted to measure RSRP in a band corresponding to one of 6, 15, 25, 50, 75 and 100 resource blocks (RBs) through an allowed measurement band transmitted in system information block type 5 (SIB5) in the case of inter-frequency measurement and through an allowed measurement band related information element (IE) transmitted in system information block type 3 (SIB3) in the case of intra-frequency measurement, or can measure RSRP in a frequency band of a DL system by default when the IE is not present.

Here, when the terminal receives an allowed measurement band, the terminal can regard the corresponding value as a maximum measurement band and freely measure an RSRP value within the corresponding value. However, when the serving cell transmits an IE defined as broadband-RSRQ and sets an allowed measurement band to 50 RB or more, the terminal needs to calculate RSRP values for all allowed measurement bands. Meanwhile, RSSI is measured in a frequency band of a receiver of the terminal according to definition of RSSI band.

Hereinafter, the present invention will be described.

In the following description, the following abbreviations may be used.

Slot format related information (SFI), downlink control information (DCI), group common PDCCH (GC PDCCH), group common downlink control information (GC DCI), physical downlink control channel (PDCCH), redundancy version (RV), transport block size (TBS), bandwidth (BW), synchronization signal block (SSB), primary synchronization signal (PSS), secondary synchronization signal (SSS), physical broadcast channel (PBCH), demodulation reference signal (DMRS), and orthogonal cover code (OCC).

The present invention provides a method of minimizing an unnecessary operation in UE operations by validating or invalidating using SFI transmitted through a GC PDCCH when a measurement resource is configured.

The present invention further provides a method that can perform together a slot format control with a beam through SFI in a multi-beam environment.

The present invention further provides a method that can effectively transmit group common DCI in a multi-beam or analog beam environment.

<Semi-static configured resources>

Semi-static configured resources may be classified into two of resources defined by cell-specific radio resource control (RRC) and resources defined by UE-specific RRC.

The resources defined by the cell-specific RRC may be resources commonly applied to all UEs in the cell and may include a synchronization signal block (SSB), a RACH resource, a random access response (RAR) resource, an SPS, a PBCH, and resources that may be used without grant (hereinafter, grant-free resources).

The resources defined by the UE-specific RRC may be resources defined independently for each UE and may include a periodic/semi-persistent CSI-RS for reporting channel state information (CSI), a resource for reporting periodic CSI, and a resource for a periodic/semi-persistent sounding reference signal (SRS).

A scheme of activating/validating or inactivating/invalidating the foregoing resources using SFI transmitted through a GC PDCCH may be considered.

When grant-free resources are set in a beam environment, a large amount of resources are required to set dedicately grant-free resources for each beam and thus it may be inefficient. Accordingly, a grant-free resource regardless of a beam may be set, and the network may indicate a receiving beam to receive on a slot basis.

Such an operation may be an operation in which the network receives a beam configured through group common DCI (GC DCI) in a corresponding slot (i.e., the GC DCI performs a role of activating the corresponding beam) or transmits information about a receiving beam through the GC DCI. Such an operation may be similar to an operation of authenticating/non-authenticating beams through an SFI indication to be described later.

<Resources control>

1. Resource authentication through SFI

After a configuration of semi-static resources is complete, the UE may validate the corresponding resource in a form of giving grant whether to use the corresponding resources to correspond to the purpose through SFI. For example, the UE may notify a direction (e.g., downlink or uplink) appropriate to a resource configured through an RRC through SFI to authenticate/validate the resource.

For such an operation, only a provisional role of the configured semi-static resources is known to the UE, and it should be in a state that is not determined whether the UE actually operates to correspond to the corresponding role.

That is, only when a direction corresponding to the role of the corresponding semi-static resource is designated through SFI, the semi-static resource performs a role. For example, when a resource is defined in which a CSI-RS for measurement may be transmitted and when SFI defines a downlink (DL) for the corresponding resource, the UE may receive the CSI-RS. In the case of resources for a CSI report or a grant-free uplink, only when the SFI defines an uplink (UL), the UE may perform CSI report or grant-free uplink transmission. Such authentication/validation may be applied to all or some of measurement related resources.

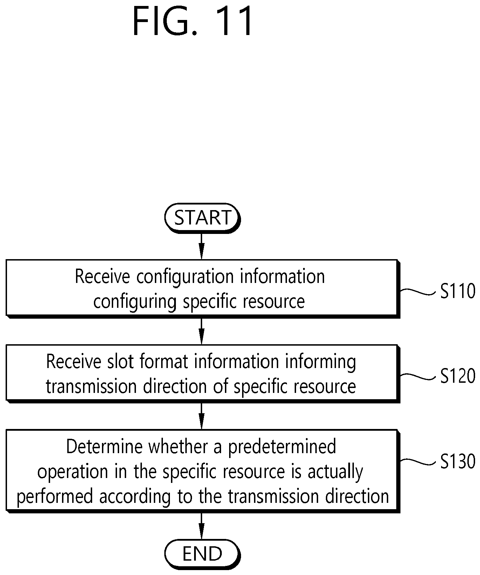

FIG. 11 illustrates a method for operating a UE according to an embodiment of the present invention.

Referring to FIG. 11, the UE receives configuration information configuring a specific resource (S110). The configuration information may indicate whether each symbol in a slot is used as a downlink (D), an uplink (U), or flexible (F).

The configuration information may configure a cell-specific (i.e., common to all UEs in a cell) or UE-specific (i.e., independent for each UE) resource. The configuration information may be received through a radio resource control (RRC) signal. The specific resource may be a resource configured semi-statically. The specific resource may be a resource indicated to a flexible resource by the configuration information.

Table 4 shows an example of the above configuration information.

[Table 4]

```
TDD-UL-DL-ConfigCommon ::= SEQUENCE {
    referenceSubcarrierSpacing SubcarrierSpacing,
    pattern1 TDD-UL-DL-Pattern,
    pattern2 TDD-UL-DL-Pattern
```

(continued)

```
    OPTIONAL, -- Need R
    ...
    }
    TDD-UL-DL-Pattern ::= SEQUENCE {
        dl-UL-TransmissionPeriodicity ENUMERATED {ms0p5, ms0p625, ms1,
    mslp25, ms2, ms2p5, ms5, ms10},
        nrofDownlinkSlots INTEGER (0..maxNrofSlots),
        nrofDownlinkSymbols INTEGER (0..maxNrofSymbols-1),
        nrofUplinkSlots INTEGER (0..maxNrofSlots),
        nrofUplinkSymbols INTEGER (0..maxNrofSymbols-1),
        ...,
        [[
        dl-UL-TransmissionPeriodicity-v1530 ENUMERATED {ms3, ms4}
    OPTIONAL -- Need R
        ]]
    }
    TDD-UL-DL-ConfigDedicated ::= SEQUENCE {
        slotSpecificConfigurationsToAddModList SEQUENCE (SIZE
    (1..maxNrofSlots)) OF TDD-UL-DL-SlotConfig OPTIONAL, -- Need N
        slotSpecificConfigurationsToreleaseList SEQUENCE (SIZE
    (1..maxNrofSlots)) OF TDD-UL-DL-SlotIndex OPTIONAL,-- Need N
    ... }
    TDD-UL-DL-SlotConfig ::= SEQUENCE {
        slot Index TDD-UL-DL-SlotIndex,
        symbols CHOICE {
            allDownlink NULL,
            allUplink NULL,
            explicit SEQUENCE {
                nrofDownlinkSymbols INTEGER (1..maxNrofSymbols-1)
    OPTIONAL, -- Need S
                nrofUplinkSymbols INTEGER (1..maxNrofSymbols-1)
    OPTIONAL -- Need S
    }
        }
    }
    TDD-UL-DL-SlotIndex ::= INTEGER (0..maxNrofSlots-1)
```

In Table 4, 'dl-UL-TransmissionPeriodicity' may represent a period of a DL-UL pattern. 'nrofDownlinkSlots' may represent the number of consecutive DL slots from the start of each DL-UL pattern, 'nrofDownlinkSymbols' may represent the number of consecutive DL symbols from the start of the slot, 'nrofUplinkSlots' may represent the number of consecutive UL symbols at the end of each DL-UL pattern, and 'nrofUplinkSymbols' may represent the number of consecutive UL symbols at the end of the slot. Symbols explicitly notifying symbols used as flexible (F) or symbols that are not indicated to DL/UL symbols may be interpreted to flexible symbols.

The UE receives slot format information informing (notifying) a transmission direction of the specific resource (S120).

The slot format information may be received through downlink control information (DCI) received through a physical downlink control channel (PDCCH). The DCI may be DCI for transmitting slot format information to a UE group. That is, the slot format information may be provided in a DCI format. For example, the DCI may be a DCI format informing (notifying) an UE group of a slot format. The DCI format may be set up to 128 bits. For example, the slot format information may indicate one of slot formats in Table 5.

[Table 5]

| format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |

(continued)

| format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |

(continued)

| format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |
| 255 | UE may determine the slot format for the slot based on *TDD-UL-DL-ConfigurationCommon,* TDD-*UL-DL-ConfigurationCommon2,* or *TDD-UL-DL-ConfigDedicated* and on detected DCI formats. | | | | | | | | | | | | | |

The transmission direction may include a downlink or an uplink.

The UE may determine whether a predetermined operation in the specific resource is actually performed according to the transmission direction (S130).

For example, when it is predetermined (scheduled) (configured) to monitor a PDCCH in at least one symbol included in the specific resource, only when the slot format information (DCI format) indicates the at least one symbol to a downlink symbol, the UE receives the PDCCH in the at least one symbol.

In the case in which it is predetermined (scheduled) (configured) to receive a PDSCH or a CSI-RS in symbols included in the specific resource, only when the slot format information (DCI format) indicates the symbols to downlink symbols, the UE may receive the PDCCH or the CSI-RS in the symbols.

When it is predetermined (scheduled) (configured) to transmit a PUCCH, a PUSCH, or a PRACH in the symbols included in the specific resource, only when the slot format information (DCI format) indicates the symbols to uplink symbols, the UE may transmit the PUCCH, the PUSCH, or the PRACH in the symbols.

When the UE is predetermined (scheduled) (configured) to transmit a periodic sounding reference signal (SRS) in the symbols included in the specific resource, the UE may transmit a periodic SRS only in symbols indicated to an uplink symbol by the slot format information (DCI format) in the symbols.

When the UE is set to repeat transmission of a PUSCH in the symbols included in the specific resource, it is not expected to detect slot format information (DCI format) indicating the symbols to a downlink or a flexible symbol.

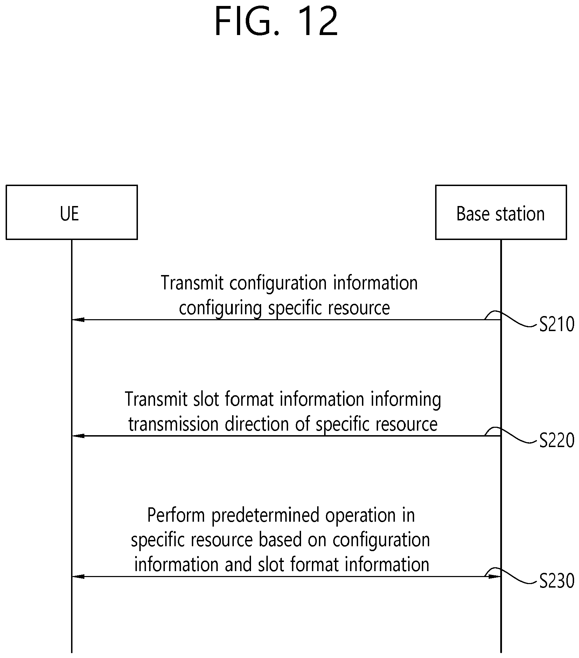

FIG. 12 illustrates the method of FIG. 11 in an aspect of a base station.

Referring to FIG. 12, the base station transmits configuration information configuring a specific resource to the UE (S210). The base station transmits slot format information informing (notifying) a transmission direction of the specific resource to the UE (S220).

The base station performs a predetermined (scheduled) operation with the UE in the specific resource based on the configuration information and the slot format information (S230).

As described in FIG. 11, the configuration information may be transmitted through an RRC signal, and the slot format information may be transmitted through DCI received through a PDCCH. The specific resource may be a semi-statically configured resource, and the transmission direction may include a downlink or an uplink.

A predetermined(scheduled) operation in the specific resource may be, for example, a PDCCH transmission, PDSCH transmission, CSI-RS transmission, PUCCH/PUSCH/PRACH reception, or SRS reception operation. Such an operation may be performed only when the slot format information indicates a transmission direction of the specific resource to an appropriate direction. The specific resource may be a resource indicated to a flexible resource by the configuration information.

When SFI performs a role of authentication/validation for any resource, a default state of a resource configuration (given by an upper layer) may be inactive. For example, when a resource configured by a semi-static DL/UL configuration is determined to a DL or UL, a state of the configured resource may be active. Even when some of the configured resources are determined to a DL/UL, some resources may have an active state.

When the GC PDCCH is not configured, a network may set whether a resource configured by resource configuration information (given by the upper layer) is assumed to an active state or a deactivated state. If a resource configured by resource configuration information is assumed to a deactivated state, when a DL/UL is set by scheduling DCI or the like, it may be regarded that the resource is in an activated state.

Alternatively, considering that a GC PDCCH operation is optional, the resource configured by resource configuration information (given by the upper layer) is in an active state by default, and when the GC PDCCH is set, the resource state may be changed to an inactive state. In this case, a transmission direction of the resource may be determined based on the GC PDCCH. When the GC PDCCH is not set, the resource configured by the resource configuration information may be used in an active state.

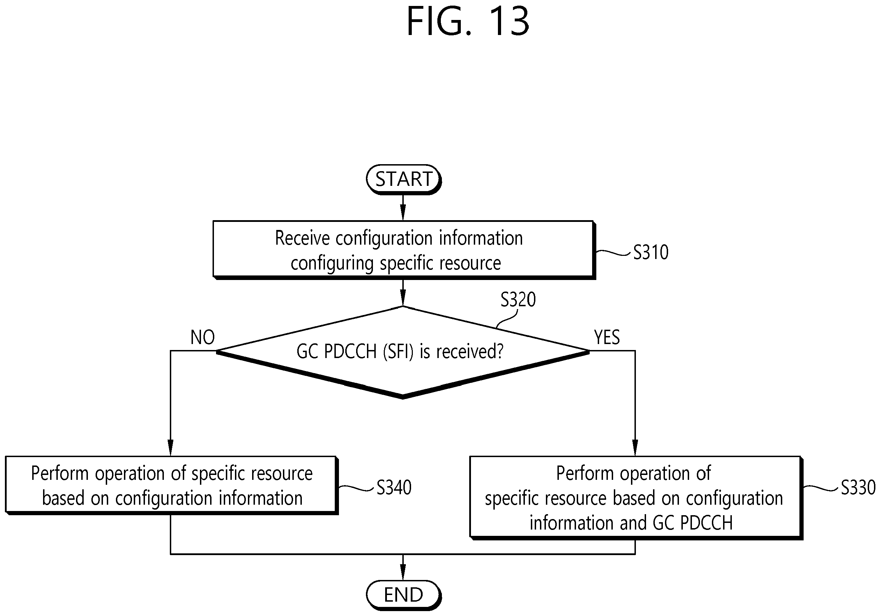

FIG. 13 illustrates a method of determining activation/deactivation of a resource and operating a resource based on an upper layer signal (e.g., configuration information of FIG. 11) that configures semi-statically a resource and slot format information.

Referring to FIG. 13, the UE receives configuration information configuring a specific resource (S310). The UE may regard that the resource configured by the configuration information is in an active state by default.

The UE determines whether a GC PDCCH including SFI is received (S320). When the UE receives the GC PDCCH, the UE performs an operation of the specific resource based on the configuration information and the GC PDCCH (S330). When the UE does not receive the GC PDCCH, the UE performs an operation of the specific resource based on the configuration information (S340).

Specifically, resources that may be activated by SFI or a GC PDCCH may be as follows.

1) CSI-RS for beam management, 2) CSI-RS for CSI feedback, 3) SRS, and 4) SPS resource.

A case in which a measurement operation may be performed by the GC PDCCH regardless of whether the resource is DL, UL, or Unknown is as follows.

1) Measurement of received signal strength indicator (RSSI): Interference measurement may be performed regardless of a resource direction of a serving cell, but when the RSSI is measured using a specific reference signal RS (e.g., ZP-CSI -RS), the RSSI may be dependent on activation/deactivation of the RS.
2) Interference measurement
3) Synchronization signal block based measurement
4) Such operations assume that measurement is not yet performed in reserved resources (e.g., resources reserved by a semi-static configuration (limited only to cell-specific configuration or a UE-specific configuration may be included). However, when it is set to measure a reserved resource by a measurement configuration, the reserved resource may be measured.

When such a method is used, in order to authenticate or activate semi-statically configured resources, the UE should be able to receive scheduling DCI or GC PDCCH transmission from the network. When receiving the GC PDCCH to which the UE belongs, the UE may obtain SFI information and activate/deactivate the semi-static resource according to the SFI information. There are the following two issues in a multi-beam environment.

1) Group configuration of GC PDCCH for enabling the UE to receive SFI

i) When the UE belongs to any group in order to receive SFI transmission, it is equivalent to that the UE receives a configuration of a radio network temporary identifier (RNTI). The UE may receive a control channel or DCI using the configured RNTI. In the multi-beam environment, the RNTI value may be set differently for each beam, and the UE may enable to view only an RNTI value of a beam set to be viewed by the UE or may enable to view any beam using the same RNTI to all beams. Even though the same RNTI is used, when a beam index is used for scrambling or the like, the UE may monitor a control channel only for the configured beams.

2) Group configuration of beams to which each SFI is applied when the UE receives SFI

i) After the UE receives SFI, when SFI authenticates or unauthenticates a resource configured semi-statically, a configuration of an applied resource may be as follows.

a) Method regardless of a beam index: In a time/frequency resource in which SFI is set to a DL, all configured DL semi-static resources may be authenticated regardless of a beam. The same may be applied to the case of UL. Alternatively, in a time/frequency resource in which SFI is set to unknown, all configured DL semi-static resources may be unauthenticated regardless of the beam. The same may be applied to the case of UL.

b) Apply only to a beam of GC SFI transmission and a QCL beam

Considering the case in which several CSI-RSs are configured in one slot, information of SFI may be limited to a semi-static resource in a quasi co-located (QCL) relationship with a beam which SFI is transmitted to be authenticated/unauthenticated. Here, when a large-scale property of a radio channel in which one symbol is transmitted through one antenna port may be inferred from a radio channel in which one symbol is transmitted through another antenna port, it may be said that the two antenna ports are QCL. The wide range characteristics of the radio channel may include at least one of delay spread, Doppler spread, Doppler shift, average gain, and average delay. Such a method may have a drawback that SFI should be separately provided for each semi-static resource.

c) Upon transmitting GC SFI, applied beam indexes are transmitted together, and the corresponding SFI may be transmitted only for the beam corresponding to the beam index. A set of beams to which each SFI transmission is applied may be notified using a bitmap.

d) GC SFI is applied to all beams, but may give a list of beam indices to be separately applied for each slot, for each symbol, for each K symbol, or for each M slot or may give a pattern of each list. For example, when SFI for four slots is transmitted, a combination of beam indexes to be applied to each slot may be transmitted together.

The above-described operations may be performed independently of data transmission. Further, for such an operation, a GC PDCCH may be transmitted to a symbol in which the corresponding reference signal is transmitted.

Because beam sweeping may not be performed in every slot in a multi-beam environment, in order to transmit the corresponding SFI to many UEs, it may not be assumed that the GC PDCCH is periodically transmitted. That is, the GC PDCCH is transmitted with a certain period P for one beam, but it may be assumed that that the GC PDCCH may be transmitted for the corresponding beam during a period P + window W in order to give more transmission opportunities. For example, W may be P. A time interval used for each transmission may be P, 2P, 3P ... or P + W, 2P + W, .... That is, SFI information up to next transmission may be transmitted.

In consideration of such operations, it may be more effective to apply invalidation in a multi-beam environment.

Alternatively, a process of performing authentication and non-authentication may be performed in a semi-static format. That is, instead of transmitting a GC PDCCH every time, but SFI transmission of a semi-static form of a method of assuming how long the corresponding pattern is valid upon transmitting or that the corresponding SFI pattern is valid until a next GC PDCCH arrives may be performed.

This represents a case in which a transmission period P of the GC PDCCH is very large, but in which the slot number M transmitted by SFI is very small and it may be assumed that M is repeated for P. In consideration of DRX, DCI missing, etc., the corresponding transmission may be performed several times within P. Alternatively, transmission may be performed with UE-specific scheduling DCI or dedicated DCI.

<Resource non-authentication through SFI>

After a configuration of semi-static resources is complete, an operation corresponding to the semi-static resource may be unauthorized through SFI.

In this case, the UE may assume an environment that defines execution of an operation appropriate to the corresponding resource as default. When a direction of the corresponding resource area is indicated to an opposition direction or 'unknown/flexible' using SFI later, the UE may recognize the indication as cancellation of an operation corresponding to the resource. For example, a CSI-RS resource for measurement is defined, and the UE receives a CSI-RS unless there is no separate additional indication. In this case, when a direction of the corresponding resource is indicated to UL or 'Unknown/Flexible' by SFI, the UE may not perform a reception operation of the CSI-RS.

Such non-authentication may be applied to all or some of measurement related resources.

The relationship between SFI and a resource configuration may be divided into 1) when SFI is activated, 2) when SFI is inactivated, and 3) when a resource configuration is maintained regardless of SFI, and the UE may receive a configuration of an operation to perform for each resource configuration or each operation.

<Resource control through semi-static DL/UL allocation>

1. Semi-static DL/UL allocation may be notified to the UE through a cell-specific RRC signal or a UE-specific RRC signal. Each of DL/UL allocation through the cell-specific RRC and DL/UL allocation through the UE-specific RRC may be semi-static DL/UL allocation, and two combinations thereof may become one semi-static DL/UL allocation. This is simply referred to as semi-static SFI. SFI through a GC PDCCH is referred to as dynamic SFI in order to avoid confusion.

The semi-static SFI and the dynamic SFI may indicate D, U, and 'unknown' as a direction and use of each symbol. 'Unknown' may have the same meaning as 'flexible'.

When the UE is first connected to the network, the UE searches for a synchronization signal block and knows synchronization signal block information, semi-static SFI information, and RACH resource information while receiving a PBCH (or PRACH resource information may be described in the specification).

In this case, the relationship between the semi-static SFI, the synchronization signal block, and the PRACH resource may be defined.

Option (Opt) 1: The semi-static SFI may not indicate different directions for a synchronization signal block resource and a PRACH resource.

For example, the semi-static SFI may not indicate U or 'Unknown' for a synchronization signal block resource or may not indicate D or 'Unknown' for a PRACH resource. The synchronization signal block resource and the PRACH resource may have a higher priority than the semi-static SFI.

The priority may be the order of a synchronization signal block resource, a PRACH resource, and semi-static SFI.

2) Opt 2: The semi-static SFI may not indicate different directions for the synchronization signal block resource, but may indicate completely or selectively different directions for the PRACH resource. For example, the semi-static SFI may indicate D or 'Unknown' for the PRACH resource. The priority may be the order of a synchronization signal block resource, semi-static SFI, or a PRACH resource.

3) Opt 3: The semi-static SFI may indicate completely or selectively different directions for the synchronization signal block resource, but may not indicate different directions for the PRACH resource. For example, the semi-static SFI may indicate U or 'unknown' for a synchronization signal block resource. The priority may be the order of a PRACH resource, semi-static SFI, and a synchronization signal block resource.

4) Opt 4: The semi-static SFI may indicate completely or selectively different directions for the synchronization signal block resource and the PRACH resource. For example, the semi-static SFI may indicate U or 'Unknown' for the synchronization signal block resource and D or 'Unknown' for the PRACH resource. The priority may be the order of semi-static SFI, a synchronization signal block resource, and a PRACH resource.

<Relationship between different configurations>

Various information may be transmitted through cell-specific signaling (e.g., remaining minimum system information (RMSI)/OSI/PBCH)) or may be configured through a UE-specific upper layer signal. When various other information is configured for different purposes, it is necessary that the UE clarifies interpretation of conflict of various configurations.

In the present invention, 1) the relationship between a semi-static DL/UL configuration and an RMSI configuration (e.g., RACH resource, RAR core set) or a PBCH configuration (e.g., RMSI core set), 2) overlap (e.g., RRM RS and CSI-RS, CSI-RS and SRS) of a configuration of each reference signal, and 3) the relationship between dynamic SFI and RMSI/PBCH/OSI configuration are described.

1. Cell-specific semi-static DL/UL allocation and RMSI configured resource

Before the UE receives semi-static DL/UL allocation, all resources may be regarded as a flexible resource. In such a situation, when the UE determines flexible to D or U, the following consideration may be performed.

When the UE is in a time point before RRC connection (or when a GC PDCCH is not configured).

i) A method of determining D/U only by semi-static DL/UL configuration.

It may be assumed that a configuration transmitted to RMSI/PBCH/OSI does not determine D/U. In the case of an RACH resource, it may be assumed that only the part determined to U by a semi-static DL/UL is valid. Otherwise, the RACH resource may be assumed to invalid and may not be transmitted. In the case of a core set, the core set may be assumed to valid only in the part determined to D or flexible by a semi-static DL/UL. Otherwise, core set monitoring may be skipped. When RMSI window is counted, only valid core set monitoring opportunities may be counted or monitoring opportunities or slot numbers may be counted regardless of valid/invalid.

For measurement, it may be assumed that an actually transmitted synchronization signal block is valid only in the part determined to D or flexible. Measurement may not be performed in other resources.

ii) A method of determining D/U by semi-static DL/UL configuration + RMSI/PBCH/OSI.

D is determined by a semi-static DL/UL configuration or it is assumed that any configuration is valid by RMSI/PBCH/OSI. For example, the RMSI core set resource may be assumed to D, and the PRACH resource may be assumed to U. Alternatively, configurations for a DL and a UL may be handled differently. For example, the synchronization signal block/core set may be assumed to D, and the PRACH resource may not be assumed to U.

iii) It may be assumed that all configurations are valid before the UE obtains a semi-static DL/UL configuration. After a semi-static DL/UL configuration is obtained, it may be assumed that a downlink resource set to D-flexible is valid and that an uplink resource set to U-flexible is valid. This means that a specific semi-static configuration is unauthenticated by a semi-static DL/UL configuration, and such unauthenticated resources may be re-authenticated through dynamic SFI.

In the above-described method, it may be assumed that an indication by dynamic scheduling is valid in a UE-specific or cell-specific manner.

A D/U may be additionally determined for a UE-specific DL/UL configuration. Alternatively, in a UE-specific case, the D/U may be applied only to a relationship with a resource configured in a UE-specific manner. In this case, the relationship with a configuration of the RMSI/OSI/PBCH may be determined only by a cell-specific DL/UL configuration.

For example, before an actually transmitted SSB is received, all of synchronization signal block candidate positions in the standard specification may be assumed to D.

After the transmitted SSB is actually received, only an indicated synchronization signal block may be assumed to D.

After an RMSI core set is received (the following operation may be also applied to a RAR core set and a paging core set), it may be assumed that all of the RMSI core set is valid when there is no DL/UL configuration. After the DL/UL configuration is received, when the RMSI core set is shared with other CSSs, RMSI core set monitoring may be skipped in the UL resource.

After dynamic SFI is received, U may be set by semi-static or dynamic SFI or (when unknown is set by dynamic SFI) RMSI core set monitoring may be skipped.

After the RACH resource configuration is received, when there is no DL/UL configuration, it may be assumed that all RACH resources are valid. However, when there is a DL/UL configuration, it may be assumed that the RACH resource is valid in U (or flexible). After dynamic SFI is received, it may be assumed that resources set to U by semi-static or dynamic SFI are valid.

When the UE is in a time point before RRC connection (or when a GC PDCCH is configured), the configuration configured in the RMSI/OSI/PBCH may not be unauthenticated by the GC PDCCH. That is, it may be assumed that a synchronization signal block position is set to D and an RACH position is set to U.

In the case of such an option, a slot format may be complicated. To overcome this drawback, the corresponding resource may be configured to unknown and it may be assumed that the configuration of the RMSI/OSI/PBCH has a priority compared with unknown (i.e., maintain D or U).

The configuration configured in the RMSI/OSI/PBCH may be (un)authenticated by the GC PDCCH. This means that UEs belonging to the corresponding group may not use the corresponding resources. Alternatively, when the corresponding resources belong to a semi-static D/U, the corresponding resource may be assumed to valid; otherwise, only when the corresponding resource is set to a D/U by SFI, the corresponding resource may be assumed to valid. Such an operation is applied only to a contention-free RACH, a connected mode RRM and RLM, and the like, and it may be assumed that the UE handles in the same manner as a situation that does not receive a configuration of a GC PDCCH in DRX or IDLE situations. Even in this case, it may be assumed that the configuration related to the core set may be monitored even in unknown. In a SCell configuration, the SIB is transmitted in a UE-specific manner. Therefore, a processing of information transmitted in the UE-specific manner may be handled in the same manner as information configured in the RMSI/OSI/PBCH or may be handled in the same manner as UE-specific signaling.

In RMSI configuration resources (e.g., actually transmitted synchronization signal blocks, PBCH, PRACH, and grant-free resources) transferred through cell-specific RRCs, a direction thereof may be defined not to conflict with cell-specific semi-static DL/UL allocation. The following options may be considered.

Option 1: Cell-specific semi-static DL/UL allocation always indicates a direction appropriate to the corresponding resource. For example, cell-specific semi-static DL/UL allocation may always notify D for an actually transmitted synchronization signal block resource and always notify U for a PRACH resource.

Option 2: Cell-specific semi-static DL/UL allocation may indicate D/U or 'Unknown (flexible)' corresponding to the resource, and the UE may transmit/receive an RMSI configured resource in both D/U and 'unknown'. That is, the UE follows an RMSI configuration in 'unknown' of semi-static DL/UL allocation.

Option 3: The RMSI configuration resource is always recognized as a highest priority and thus the UE follows the RMSI configuration.

<UE-specific semi-static DL/UL assignment and UE-specific RRC configuration resource>

The RMSI configuration resource (e.g., the actually transmitted synchronization signal block, PBCH, PRACH, and grant-free resource) transmitted through an UE-specific RRC may be defined such that a direction thereof does not conflict with UE-specific semi-static DL/UL allocation. The following options may be considered.

Option 1: UE-specific semi-static DL/UL allocation always indicates a direction appropriate to the corresponding resource. For example, UE-specific semi-static DL/UL allocation may always notify D for the actual transmitted synchronization signal block resource, and always notify U for the PRACH resource.

Option 2: UE-specific semi-static DL/UL allocation indicates D/U or 'Unknown (flexible)' corresponding to the resource, and the UE transmits/receives an RMSI configuration resource in both D/U and 'unknown'.

Option 3: An RMSI configuration resource is always recognized as a highest priority and thus the UE follows an RMSI configuration.

<Slot format indication for multi beams>

When a UE receives a configuration of a plurality of beams, the UE should be able to receive SFI corresponding to each beam. The same SFI may be transferred to all beams or some beams. SFI transferred to the GC PDCCH may be single or multiple according to the number of beams, and when there is a plurality of SFI, indexing between each SFI and the beam may be performed. SFI versus beam may be matched to 1:1 or 1: multi. In this case, each indexing information may be transmitted to the UE through an RRC or a higher layer signal.

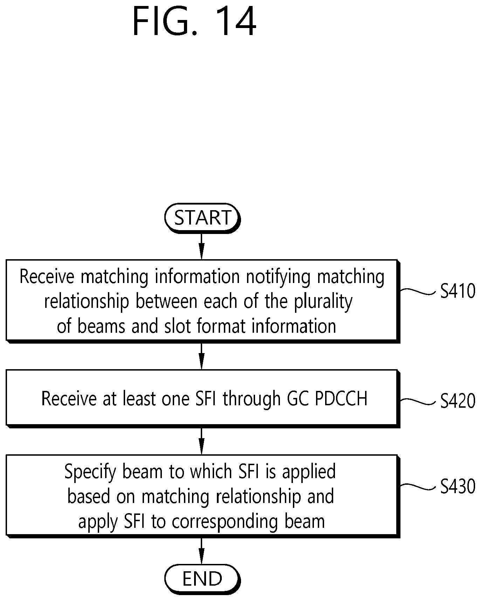

FIG. 14 illustrates a UE operation according to another embodiment of the present invention.

Referring to FIG. 14, the UE receives matching information notifying a matching relationship between each of the plurality of beams and slot format information (S410) and receives at least one SFI through a GC PDCCH (S420). The UE may specify a beam to which the SFI is applied based on the matching relationship and apply the SFI to the corresponding beam. Hereinafter, the matching relationship will be described in detail.

<SFI and beam index matching>

1) 1:1 matching: one beam may be matched to one SFI. In this case, SFI may exist in the GC PDCCH by the number of beams set to the UE.

2) 1: multi matching (bind in order of beam index): One SFI may indicate a slot format of multi beams. When a beam index is aligned in a method of 1, 2, 3, ... , the number of beams may be sequentially divided into and matched to a bundle of the number of SFI. For example, when beams are 1, 2, 3, 4, 5, and 6 and when three SFI is supported, the beams 1 and 2 may be matched to SFI 1, the beams 4 and 5 may be matched to SFI 2, and the beams 5 and 6 may be matched to SFI 3.

3) 1: multi matching (bind the beam based on offset of the index): One SFI may indicate a slot format of multi beams. When a beam index is aligned in a method of 1, 2, 3, ..., the number of beams may be divided into and matched to bundles of the number of SFI by a certain offset criterion. For example, when there are beams 1, 2, 3, 4, 5, and 6 and when 3 SFI is supported, if 3 is given to offset, beams 1 and 4 each may be matched to SFI 1, beams 2 and 5 each may be matched to SFI 2, and beams 3 and 6 each may be matched to SFI 3.

4) 1: multi matching (bind only when there is a beam having the same SFI): As in the above 2) and 3), the predetermined number of beams may have the same SFI, but the number of beams in which one SFI may indicate a slot format may be defined differently from that of each SFI. In this case, the beam may be sequentially matched to SFI according to an index or may be matched according to an irregular or regular pattern.

When SFI is read through such matching, an index of a beam matched to the SFI is also naturally read and thus a beam used in the slot may be known.

For example, in the case of 1:1 matching, when an SFI period is 4, if D is given only to one slot in a beam 2, if unknown is given to the remaining 3 slots, if unknown is given to one slot in a beam 3, and if DDD is given to 3 slots, the UE uses a beam 2 in one slot and uses a beam 3 in two to four slots.

In the case of 1: multi matching, it is assumed that beams 1, 2, and 3 are set to a UE 1 and that beams 4, 5, and 6 are set to a UE 2 and that beams 7, 8, and 9 are set to a UE 3 and that SFI 1 is matched to beams 1, 4, and 7 and that SFI 2 is matched to beams 2, 5, and 8 and that SFI 3 is matched to beams 3, 6, and 9. In this case, when SFI is simultaneously transmitted to UEs 1, 2, and 3 and when SFI 1 is transmitted in the GC PDCCH, each UE receives the beams 1, 4, and 7. An index of the beam set for each UE may or may not be sequentially defined. When the beam index and the SFI are matched, a matching method of 2), 3), and 4) may be applied.

Such an operation may be used not only for matching between a beam and SFI within the GC PDCCH, but also for matching between a beam and GC DCI notifying group common control information.

<(Non)authentication of multi beams by indication through SFI>

When semi-static resources are authenticated or unauthorized using SFI, SFI should be transmitted for a resource control at even a segment in which SFI is not required and thus an overhead may increase. In particular, in a multi-beam environment, due to lack of core sets according to such overhead increase, it may be difficult to transmit the SFI to correspond to a configured period.

In this case, it should be determined whether SFI is not transmitted because any beam is not used or whether SFI is not transmitted due to lack of a core set, but when the number of SFI to be transmitted to the UE is first defined through an upper layer signal such as RRC, the UE may determine this.

For this reason, a dedicated core set for SFI for each beam may be defined, and a slot to which a dedicated core set belongs may be separately set. In this case, dedicated core sets may be the same or different for each beam.

For example, it is assumed that a period of the GC PDCCH is P and that a slot having a dedicated core set for transmitting SFI of any beam is W. When P is 10 and W for any beam A is 2, if a slot in which a period of the GC PDCCH starts is a slot 1, a core set for SFI of a beam A is located at a slot 2. When the UE does not find SFI of the beam A in the slot 1, the UE performs a search operation in the slot 2. In this case, because the slot 1 has already passed, it is necessary to define an UE operation thereof.

1) Only the corresponding slot format may be recognized from a slot defined to W. When SFI is not received in a slot 1, which is an original period, it may be good that any SFI is not assumed at slots before a W slot for system stability. The UE may follow only a slot format from the slot defined to W to the end of the GC PDCCH among SFI received from the dedicated core set.

2) A default slot format for a slot before a slot defined to W may be defined. According to an RRC, a higher layer signal, or a standard specification, a default slot format may be predefined that may follow when SFI is not received in a slot that should originally receive SFI, and the UE may follow a default slot format until a slot prior to a W slot.

3) SFI may be defined always considering a W slot. That is, in order not to cause a problem in a UE operation, SFI received in an original period and SFI received in the W slot may be defined from the W slot. For example, when SFI from a slot 1 to a slot (W-1) is defined to 'Unknown/Flexible', the UE may receive SFI for a beam A at any location

4) W may be a starting point of a beam-specific period. SFI of a beam coming from W may have a separate period starting from W in addition to a period of an existing GC PDCCH. In this case, transmitted SFI may also transmit slot formats of the same slot number as that of the existing GC PDCCH using W as a starting point. For example, when P is 10 and when W for a beam A is 2, original SFI should have a slot format from a slot 1 to a slot 10, but SFI transmitted from W may transmit a slot format from a slot 2 to a slot 11. In this case, it is necessary that SFI patterns defined in advance to the UE are redefined according to a period change. This is because an SFI pattern should be made based on W.

<SFI for multi beams>

When a plurality of beams may be configured to the UE, an environment may be generally considered in which each beam has the same SFI. However, when the UE is connected to a plurality of transmission and/or reception points (TRPs) and when the beams are connected in each TRP, SFI of a beam for each TRP may be different. In this way, when TRP specific D/U configuration is performed, different SFI may be notified for each TRP.

<Group common DCI transmission>

In a multi-beam environment, transmission of group common DCI (GC DCI) may be similar to that of the GC PDCCH in many portions. However, in the case of GC DCI, the following may be assumed to notify a group to which a UE belongs.

1) RNTI for each beam or beam index-based scrambling.

RNTI may be separately configured for each beam, and the number of indexes of the RNTI may be separately set to the corresponding RNTI. One UE may be set to several beam groups, and indexes may be different for each group. The UE may be set to one or several groups according to mobility of the UE. When the beam is changed through beam recovery, groups of each UE may also be changed.

2) Shared RNTI or shared scrambling

RNTI may be shared regardless of the beam, and indexes for each UE may be the same. In this case, there is a drawback that a size of the group increases according to the number of UEs and that an entry of UEs that are not received should be transmitted, but there is a merit that the UE may freely change the beam.

When there are few UEs in the corresponding beam, it may be effective to transmit through dedicated DCI rather than GC DCI. Therefore, when there is dedicated DCI of the UE, the network may be set such that the content of GC DCI is piggybacked to the dedicated DCI.

Because examples of the above-mentioned proposed method may also be included in one of implementation methods of the present invention, it is obvious that the examples may be regarded as a kind of proposed methods. Further, the described proposed methods may be implemented independently, but may be implemented in a combination (or merging) form of some proposed methods. A rule may be defined such that the base station notifies the UE of information (or information on rules of the proposed methods) on whether proposed methods are applied through a signal (e.g., physical layer signal or upper layer signal) in advance defined.

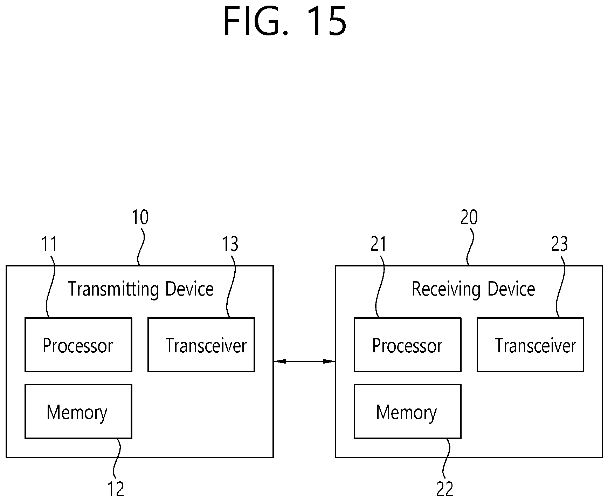

FIG. 15 is a block diagram showing components of a transmitting device 10 and a receiving device 20 for implementing the present invention. Here, the transmitting device and the receiving device may be a base station and a terminal.

The transmitting device 10 and the receiving device 20 may respectively include transceivers 13 and 23 capable of transmitting or receiving radio frequency (RF) signals carrying information, data, signals and messages, memories 12 and 22 for storing various types of information regarding communication in a wireless communication system, and processors 11 and 21 connected to components such as the transceivers 13 and 23 and the memories 12 and 22 and configured to control the memories 12 and 22 and/or the transceivers 13 and 23 such that the corresponding devices perform at least one of embodiments of the present invention.

The memories 12 and 22 can store programs for processing and control of the processors 11 and 21 and temporarily store input/output information. The memories 12 and 22 may be used as buffers.

The processors 11 and 21 generally control overall operations of various modules in the transmitting device and the receiving device. Particularly, the processors 11 and 21 can execute various control functions for implementing the present invention. The processors 11 and 21 may be referred to as controllers, microcontrollers, microprocessors, microcomputers, etc. The processors 11 and 21 can be realized by hardware, firmware, software or a combination thereof. When the present invention is realized using hardware, the processors 11 and 21 may include ASICs (application specific integrated circuits), DSPs (digital signal processors), DSPDs (digital signal processing devices), PLDs (programmable logic devices), FPGAs (field programmable gate arrays) or the like configured to implement the present invention. When the present invention is realized using firmware or software, the firmware or software may be configured to include modules, procedures or functions for performing functions or operations of the present invention, and the firmware or software configured to implement the present invention may be included in the processors 11 and 21 or stored in the memories 12 and 22 and executed by the processors 11 and 21.

The processor 11 of the transmitting device 10 can perform predetermined coding and modulation on a signal and/or data to be transmitted to the outside and then transmit the signal and/or data to the transceiver 13. For example, the processor 11 can perform demultiplexing, channel coding, scrambling and modulation on a data string to be transmitted to generate a codeword. The codeword can include information equivalent to a transport block which is a data block provided by an MAC layer. One transport block (TB) can be coded into one codeword. Each codeword can be transmitted to the receiving device through one or more layers. The transceiver 13 may include an oscillator for frequency up-conversion. The transceiver 13 may include one or multiple transmission antennas.

The signal processing procedure of the receiving device 20 may be reverse to the signal processing procedure of the transmitting device 10. The transceiver 23 of the receiving device 20 can receive RF signals transmitted from the transmitting device 10 under the control of the processor 21. The transceiver 23 may include one or multiple reception antennas. The transceiver 23 can frequency-down-convert signals received through the reception antennas to restore baseband signals. The transceiver 23 may include an oscillator for frequency down conversion. The processor 21 can perform decoding and demodulation on RF signals received through the reception antennas to restore data that is intended to be transmitted by the transmitting device 10.

The transceivers 13 and 23 may include one or multiple antennas. The antennas can transmit signals processed by the transceivers 13 and 23 to the outside or receive RF signals from the outside and deliver the RF signal to the transceivers 13 and 23 under the control of the processors 11 and 21 according to an embodiment of the present invention. The antennas may be referred to as antenna ports. Each antenna may correspond to one physical antenna or may be configured by a combination of a plurality of physical antenna elements. A signal transmitted from each antenna cannot be decomposed by the receiving device 20. A reference signal (RS) transmitted corresponding to an antenna defines an antenna from the viewpoint of the receiving device 20 and can allow the receiving device 20 to be able to estimate a channel with respect to the antenna irrespective of whether the channel is a single radio channel from a physical antenna or a composite channel from a plurality of physical antenna elements including the antenna. That is, an antenna can be defined such that a channel carrying a symbol on the antenna can be derived from the channel over which another symbol on the same antenna is transmitted. A transceiver which supports a multi-input multi-output (MIMO) function of transmitting and receiving data using a plurality of antennas may be connected to two or more antennas.

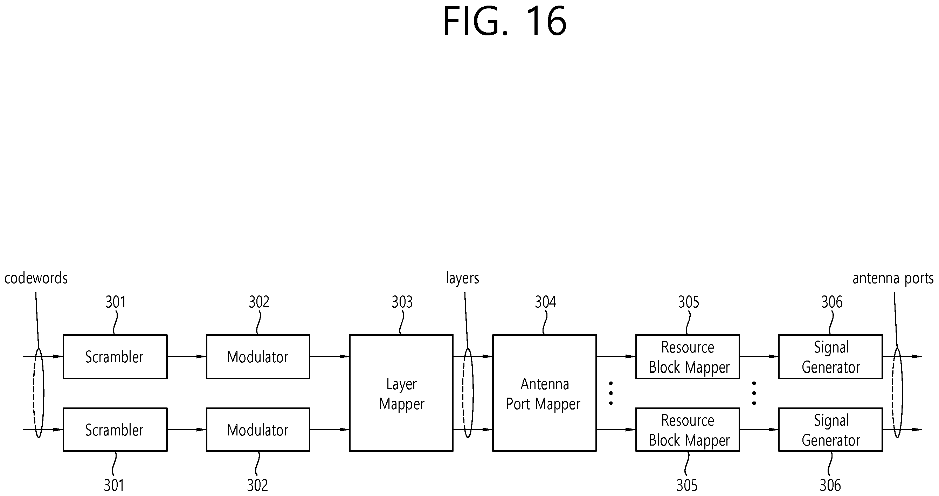

FIG. 16 illustrates an example of a signal processing module structure in the transmitting device 10. Here, signal processing can be performed by a processor of a base station/terminal, such as the processor 11 of FIG. 15.

Referring to FIG. 16, the transmitting device 10 included in a terminal or a base station may include scramblers 301, modulators 302, a layer mapper 303, an antenna port mapper 304, resource block mappers 305 and signal generators 306.

The transmitting device 10 can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Each signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

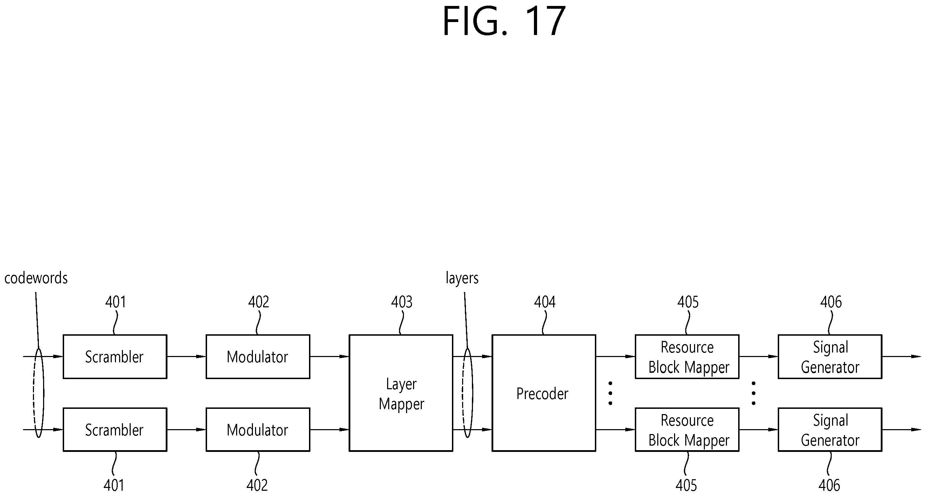

FIG. 17 illustrates another example of the signal processing module structure in the transmitting device 10. Here, signal processing can be performed by a processor of a terminal/base station, such as the processor 11 of FIG. 15.

Referring to FIG. 17, the transmitting device 10 included in a terminal or a base station may include scramblers 401, modulators 402, a layer mapper 403, a precoder 404, resource block mappers 405 and signal generators 406.

The transmitting device 10 can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N×M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Each signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter. The signal processing procedure of the receiving device 20 may be reverse to the signal processing procedure of the transmitting device. Specifically, the processor 21 of the transmitting device 10 decodes and demodulates RF signals received through antenna ports of the transceiver 23. The receiving device 20 may include a plurality of reception antennas, and signals received through the reception antennas are restored to baseband signals, and then multiplexed and demodulated according to MIMO to be restored to a data string intended to be transmitted by the transmitting device 10.

The receiving device 20 may include a signal restoration unit for restoring received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit for removing a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

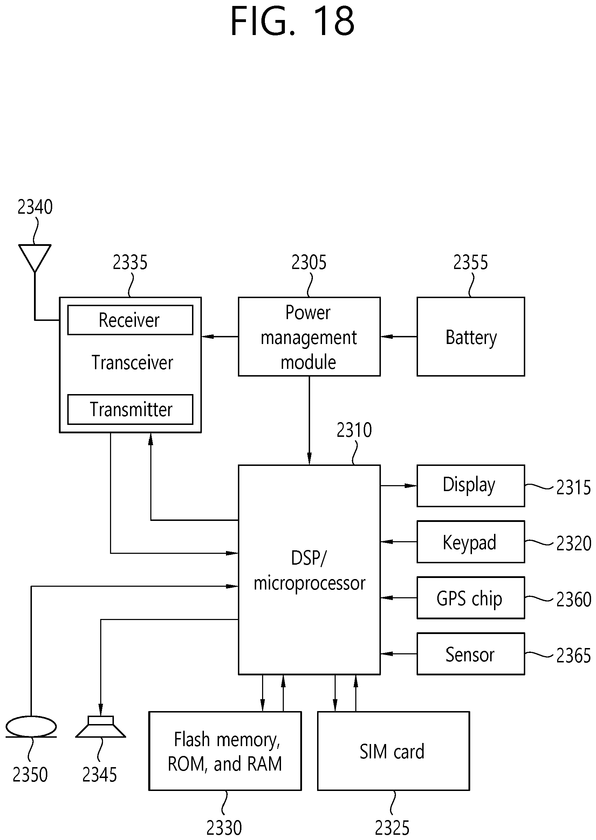

FIG. 18 illustrates an example of a wireless communication device according to an implementation example of the present invention.

Referring to FIG. 18, the wireless communication device, for example, a terminal may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 18 may be the processors 11 and 21 in FIG. 15.

The memory 2330 is connected to the processor 231 and stores information related to operations of the processor. The memory may be located inside or outside the processor and connected to the processor through various techniques such as wired connection and wireless connection. The memory 2330 in FIG. 18 may be the memories 12 and 22 in FIG. 15.

A user can input various types of information such as telephone numbers using various techniques such as pressing buttons of the keypad 2320 or activating sound using the microphone 250. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 18 may be the transceivers 13 and 23 in FIG. 15.

Although not shown n FIG. 18, various components such as a camera and a universal serial bus (USB) port may be additionally included in the terminal. For example, the camera may be connected to the processor 2310.

FIG. 18 is an example of implementation with respect to the terminal and implementation examples of the present invention are not limited thereto. The terminal need not essentially include all the components shown in FIG. 18. That is, some of the components, for example, the keypad 2320, the GPS chip 2360, the sensor 2365 and the SIM card 2325 may not be essential components. In this case, they may not be included in the terminal.

**Claims**

1. A method for operating a user equipment (UE) in a wireless communication system, the method comprising:

   receiving configuration information configuring a specific resource;
   receiving slot format information informing a transmission direction of the specific resource; and
   determining whether a predetermined operation in the specific resource is actually performed according to the transmission direction.

2. The method of claim 1, wherein the configuration information is received through radio resource control (RRC) signal.

3. The method of claim 1, wherein the slot format information is received through downlink control information (DCI) received through a physical downlink control channel (PDCCH).

4. The method of claim 1, wherein the specific resource is a resource configured semi-statically.

5. The method of claim 1, wherein the transmission direction comprises a downlink or an uplink.

6. The method of claim 1, wherein the scheduled operation in the specific resource is a channel state information reference signal (CSI-RS) reception operation.

7. The method of claim 6, wherein the CSI-RS reception operation is performed only when the slot format information indicates a transmission direction of the specific resource to a downlink.

8. The method of claim 1, wherein the specific resource is a resource indicated to a flexible resource by the configuration information.

9. A user equipment (UE), comprising:

   a transceiver configured to transmit and receive a radio signal; and
   a processor coupled to the transceiver to operate;
   wherein the processor is configured to receive configuration information configuring a specific resource, to receive slot format information informing a transmission direction of the specific resource, and to determine whether a predetermined operation in the specific resource is actually performed according to the transmission direction.

10. The UE of claim 9, wherein the scheduled operation in the specific resource is a channel state information reference signal (CSI-RS) reception operation.

11. The UE of claim 10, wherein the CSI-RS reception operation is performed only when the slot format information indicates a transmission direction of the specific resource to a downlink.

12. A method of operating a base station in a wireless communication system, the method comprising:

   transmitting configuration information configuring a specific resource to a user equipment (UE);
   transmitting slot format information informing a transmitting direction of the specific resource to the UE; and
   performing a predetermined operation with the UE in the specific resource based on the configuration information and the slot format information.

13. The method of claim 12, wherein the scheduled operation in the specific resource is a channel state information reference signal (CSI-RS) transmission operation.

14. The method of claim 13, wherein the CSI-RS transmission operation is performed in the specific resource only when the slot format information indicates a transmission direction of the specific resource to a downlink.

15. A base station, comprising:

a transceiver configured to transmit and receive a radio signal; and
a processor coupled to the transceiver to operate,
wherein the processor is configured to transmit configuration information configuring a specific resource to a user equipment (UE), to transmit slot format information informing a transmission direction of the specific resource to the UE, and to perform a scheduled operation with the UE in the specific resource based on the configuration information and the slot format information.

# FIG. 1

# FIG. 2

# FIG. 3

| UE | eNB | MME |
|---|---|---|
| NAS | | NAS |
| RRC | RRC | |
| PDCP | PDCP | |
| RLC | RLC | |
| MAC | MAC | |
| PHY | PHY | |

# FIG. 4

# FIG. 5

frame (10 ms)

subframe (1 ms)

15kHz 1slot(14symbol): 1ms subframe

| 0 | 1 | 2 | 3 | 4 | 5 | 6 | 7 | 8 | 9 | 10 | 11 | 12 | 13 |
|---|---|---|---|---|---|---|---|---|---|----|----|----|----|

| 0 | 1 | 2 | 3 | 4 | 5 | 6 | 7 | 8 | 9 | 10 | 11 | 12 | 13 |
|---|---|---|---|---|---|---|---|---|---|----|----|----|----|

30kHz 1slot(14symbol): 0.5ms

| 0 | 1 | 2 | 3 | 4 | 5 | 6 | 7 | 8 | 9 | 10 | 11 | 12 | 13 |
|---|---|---|---|---|---|---|---|---|---|----|----|----|----|

60kHz 1slot(14symbol): 0.25ms

# FIG. 6

CCE #2    CCE #n

$N^{CORESET}_{RB}$ number of resource blocks

CCE #1

1, 2 or 3 OFDM symbols

# FIG. 7

300

system bandwidth

subframe (=14 symbols)

LTE/LTE-A

: CORESET

301

302

303

system bandwidth

slot (=14 symbols)

NR

EP 3 503 651 A1

# FIG. 8

# FIG. 9

# FIG. 10

BRS

$R_X$: Resource for antenna port X

Freq.

Subframe

Symbol

0 1 2 3 4 5 6 7 8 9 10 11 12 13

synchronization signal

Resource block

$R_0$
$R_1$
$R_2$
$R_3$
$R_4$
$R_5$
$R_6$
$R_7$

xPBCH

DM-RS for xPBCH

0
1
13

0
8
13

EP 3 503 651 A1

# FIG. 11

```
                        ( START )
                            │
                            ▼
        ┌─────────────────────────────────────────┐
        │        Receive configuration information  │
        │         configuring specific resource     │────── S110
        └─────────────────────────────────────────┘
                            │
                            ▼
        ┌─────────────────────────────────────────┐
        │     Receive slot format information informing │
        │     transmission direction of specific resource │────── S120
        └─────────────────────────────────────────┘
                            │
                            ▼
        ┌─────────────────────────────────────────┐
        │        Determine whether a predetermined  │
        │     operation in the specific resource is actually │────── S130
        │  performed according to the transmission direction │
        └─────────────────────────────────────────┘
                            │
                            ▼
                        ( END )
```

# FIG. 12

| UE | | Base station |
|----|--|--------------|

Transmit configuration information
configuring specific resource
— S210

Transmit slot format information informing
transmission direction of specific resource
— S220

Perform predetermined operation in
specific resource based on configuration
information and slot format information
— S230

# FIG. 13

START

Receive configuration information
configuring specific resource — S310

S320

NO ◁ GC PDCCH (SFI) is received? ▷ YES

Perform operation of specific resource
based on configuration information — S340

Perform operation of
specific resource based on configuration
information and GC PDCCH — S330

END

EP 3 503 651 A1

# FIG. 14

START

Receive matching information notifying matching
relationship between each of the plurality
of beams and slot format information ~S410

Receive at least one SFI through GC PDCCH ~S420

Specify beam to which SFI is applied
based on matching relationship and
apply SFI to corresponding beam ~S430

END

# FIG. 15

# FIG. 16

EP 3 503 651 A1

codewords

layers

antenna ports

301 | Scrambler | 302 | Modulator | 303 | Layer Mapper | 304 | Antenna Port Mapper | 305 | Resource Block Mapper | 306 | Signal Generator

301 | Scrambler | 302 | Modulator | 305 | Resource Block Mapper | 306 | Signal Generator

# FIG. 17

EP 3 503 651 A1

# FIG. 18

## INTERNATIONAL SEARCH REPORT

| International application No. |
| --- |
| **PCT/KR2018/012920** |

**A. CLASSIFICATION OF SUBJECT MATTER**

*H04W 72/04(2009.01)i*

According to International Patent Classification (IPC) or to both national classification and IPC

**B. FIELDS SEARCHED**

Minimum documentation searched (classification system followed by classification symbols)
H04W 72/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: slot format information, transmission direction, DCI, flexible

**C. DOCUMENTS CONSIDERED TO BE RELEVANT**

| Category* | Citation of document, with indication, where appropriate, of the relevant passages | Relevant to claim No. |
| --- | --- | --- |
| X | NTT DOCOMO, INC., "Remaining Issues on Group-common PDCCH", R1-1718205, 3GPP TSG RAN WG1 Meeting 90bis, Prague, CZ, 03 October 2017 See sections 1, 2.5.1, 2.5.3. | 1-15 |
| A | SAMSUNG, "On UE-group Common PDCCH", R1-1717643, 3GPP TSG RAN WG1 #90bis, Prague, Czech Republic, 03 October 2017 See sections 1-2. | 1-15 |
| A | QUALCOMM INCORPORATED, "Offline Discussion on GC-PDCCH Carrying SFI", R1-1719172, 3GPP TSG RAN WG1 #90bis, Prague, Czech Republic, 17 October 2017 See sections 1-3. | 1-15 |
| A | LG ELECTRONICS, "Discussion on Group Common PDCCH", R1-1717953, 3GPP TSG RAN WG1 #90bis, Prague, Czech Republic, 03 October 2017 See sections 1-2.7. | 1-15 |
| A | APPLE INC., "Slot Format Indicator in Group-common PDCCH", R1-1717782, 3GPP TSG RAN WG1 #90bis, Prague, Czech Republic, 03 October 2017 See sections 1-4.3. | 1-15 |

| ☐ Further documents are listed in the continuation of Box C. | ☒ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 24 JANUARY 2019 (24.01.2019) | **24 JANUARY 2019 (24.01.2019)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

| International application No. |
| --- |
| **PCT/KR2018/012920** |

| Patent document cited in search report | Publication date | Patent family member | Publication date |
| --- | --- | --- | --- |
| NONE | | | |

Form PCT/ISA/210 (patent family annex) (January 2015)